(19) Europäisches Patentamt
European Patent Office
Office européen des brevets

(11) **EP 3 473 367 A1**

(12) **EUROPEAN PATENT APPLICATION**

(43) Date of publication:
**24.04.2019 Bulletin 2019/17**

(51) Int Cl.:
**B23K 9/095** (2006.01)    **B23K 9/10** (2006.01)

(21) Application number: **18192689.0**

(22) Date of filing: **05.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2017 US 201715696423**
**09.03.2018 US 201815916317**

(71) Applicant: **Lincoln Global, Inc.**
**Santa Fe Springs, CA 90670 (US)**

(72) Inventors:
• **KOOKEN, Todd Eric**
**Solon, OH Ohio 44319 (US)**

• **DANIEL, Joseph A.**
**Sagamore Hills, OH Ohio 44067 (US)**
• **ALBRIGHT, Matthew A.**
**Thomson, OH Ohio 44086 (US)**
• **CHANTRY, Bruce John**
**Solon, OH Ohio 44139 (US)**
• **PETERS, Steven R.**
**Huntsburg, OH Ohio 44046 (US)**

(74) Representative: **Grosse Schumacher Knauer von Hirschhausen**
**Patent- und Rechtsanwälte**
**Frühlingstrasse 43A**
**45133 Essen (DE)**

(54) **A SYSTEM FOR RELATING WELDING WIRE TO A POWER SOURCE, A WIRE DOCKING STATION AND A METHOD OF MONITORING A REPLACEABLE SOURCE OF CONSUMABLE WELDING WIRE**

(57)    Embodiments of systems (100, 200, 600) and methods to relate welding wire (615, 615') to a welding power source (130, 605) are disclosed. One embodiment is a wire docking station (140, 160, 620) for use in a welding environment (110, 120). The wire docking station (140, 160, 620) includes a loading platform (141) configured to accept a replaceable source of consumable welding wire, and a scale configured to generate a weight status of the source of consumable welding wire (615, 615') when docked with the loading platform (141). The wire docking station (140, 160, 620) also includes a communication module and a contact mechanism (643) configured to form an electrical connection between the source of consumable welding wire and the communication module. The communication module includes a transmitter configured to transmit docking station data as current draw pulses to a welding power source (130, 150, 605) over the consumable welding wire (615, 615') of the source of consumable welding wire (615, 615').

FIG. 6

EP 3 473 367 A1

**Description**

**FIELD OF THE INVENTION**

The invention is related to a system for relating welding wire to a welding power source according to claim 1, to a wire docking station according to claim 9 and to a method of monitoring a replaceable source of consumable welding wire according to claim 13. This U.S. Patent Application is a continuation-in-part of U.S. Patent Application serial number 15/696,423 filed on September 6, 2017 entitled "Relating Welding Wire to a Power Source", which is incorporated by reference herein in its entirety. U.S. Published Patent Application 2017/0120363 A1, published on May 4, 2017 and having serial number 15/294,649, is incorporated by reference herein in its entirety.

Embodiments of the present invention relate to systems and methods associated with a welding environment. More specifically, embodiments of the present invention relate to systems and methods for relating sources of consumable welding wire to welding power sources in a welding environment.

**TECHNICAL BACKGROUND**

In a welding environment (e.g., in a factory environment where welding is performed), many welding power sources and many sources of consumable welding wire may be located at various locations within the welding environment. At any given time, some welding power sources within the welding environment may or may not be used. Similarly, at any given time, some sources of consumable welding wire within the welding environment may or may not be used. Furthermore, a particular welding power source and a particular source of consumable welding wire, being used together during a welding operation, may or may not be located near each other within the welding environment. This can make it difficult for a manager of the welding environment (or other persons within the welding environment responsible for keeping the welding environment up and running) to determine which welding power source is connected to which source of consumable welding wire, if any. A more effective way of determining and tracking which sources of consumable welding wire are being used by which welding power sources in a welding environment is desired.

**DESCRIPTION**

In order to improve handling of welding equipment in a welding environment a system for relating welding wire to a welding power source according to claim 1 is described and a wire docking station according to claim 9 and a method of monitoring a replaceable source of consumable welding wire according to claim 13. Preferred embodiments are subject of the subclaims. Embodiments of the present invention include systems and methods for relating sources of consumable welding wire to welding power sources in a welding environment (e.g., a factory). In one embodiment, a networked configuration of welding power sources, welding wire docking stations, and server computers allow the welding power sources to be properly related to sources of consumable welding wire being used by those welding power sources within a welding environment. In another embodiment, a welding wire docking station is configured to communicate with a welding power source over a consumable welding wire to monitor the status of a source of consumable welding wire loaded on the wire docking station.

One embodiment includes a method of relating welding wire to a welding power source in a welding environment. The method includes receiving first data associated with a source of consumable welding wire within a welding environment at one or more server computers in a networked system. The first data indicates at least one of an identity or a location of the source of consumable welding wire within the welding environment. The first data also indicates a weight status indicating a change in weight of the source of consumable welding wire within the welding environment. The method further includes receiving second data associated with a welding power source within the welding environment at the one or more server computers in the networked system. The second data indicates at least one of an identity or a location of the welding power source within the welding environment. The second data also indicates an activation status indicating an activation state of the welding power source within the welding environment. The method also includes the one or more server computers in the networked system matching the welding power source to the source of consumable welding wire. The matching is based on at least the first data and the second data and indicates that the welding power source is actively using the source of consumable welding wire during a welding operation within the welding environment. The source of consumable welding wire may include, for example, a drum of welding wire, a box of welding wire, or a spool of welding wire. The networked system may include, for example, at least one of a local area network (LAN), a wide area network (WAN), or a cloud-based network. In one embodiment, the method further comprises generating the weight status, indicating a change in weight of the source of consumable welding wire within the welding environment, via at least a scale of a welding wire docking station loaded with the source of consumable welding wire. In one embodiment, the method includes reading an RFID tag of the source of consumable welding wire, via an RFID reader proximate to the source of consumable welding wire, to extract the identity of the source of consumable welding wire. In one embodiment, the method includes receiving the location of the source of consumable welding wire, as part of the first data, from a welding wire docking station loaded with the source of consumable welding wire. In one embodiment, the method includes reading an RFID tag of the source of consumable welding wire, via an RFID reader proximate to the source of consumable welding wire, to extract characteristics of the source of consumable welding wire. In one embodiment, the method includes receiving the characteristics of the source of consumable welding wire, as part of the first data, at the one or more server computers in the networked system. In accordance with one embodiment, the characteristics of the source of consumable welding wire include at least one of a wire type, a wire size, a lot code, and a wire density.

One embodiment includes a method of relating welding wire to a welding power source in a welding environment. The method includes receiving first data associated with a source of consumable welding wire within a welding environment at one or more server computers in a networked system. The first data indicates at least one of an identity or a location of the source of consumable welding wire within the welding environment. The first data also indicates an energization status indicating an energization state of the source of consumable welding wire within the welding environment. The method also includes receiving second data associated with a welding power source within the welding environment at the one or more server computers in the networked system. The second data indicates at least one of an identity or a location of the welding power source within the welding environment. The second data also indicates an activation status indicating an activation state of the welding power source within the welding environment. The method further includes the one or more server computers in the networked system matching the welding power source to the source of consumable welding wire. The matching is based on at least the first data and the second data and indicates that the welding power source is actively using the source of consumable welding wire during a welding operation within the welding environment. The source of consumable welding wire may include, for example, one of a drum of welding wire, a box of welding wire, or a spool of welding wire. The networked system may include, for example, at least one of a local area network (LAN), a wide area network (WAN), or a cloud-based network. In one embodiment, the method also includes generating the energization status, indicating an energization state of the source of consumable welding wire within the welding environment, via at least one of a magnetic sensor, an electromagnetic sensor, or a voltage sensor proximate to the source of consumable welding wire. In one embodiment, the method includes reading an RFID tag of the source of consumable welding wire, via an RFID reader proximate to the source of consumable welding wire, to extract the identity of the source of consumable welding wire. In one embodiment, the method includes receiving the location of the source of consumable welding wire, as part of the first data, from a welding wire docking station loaded with the source of consumable welding wire. In one embodiment, the method includes reading an RFID tag of the source of consumable welding wire, via an RFID reader proximate to the source of consumable welding wire, to extract characteristics of the source of consumable welding wire. In one embodiment, the method includes receiving the characteristics of the source of consumable welding wire, as part of the first data, at the one or more server computers in the networked system. In accordance with one embodiment, the characteristics of the source of consumable welding wire include at least one of a wire type, a wire size, a lot code, and a wire density.

One embodiment includes a networked system for relating welding wire to a welding power source in a welding environment. The system includes at least one server computer. The at least one server computer is configured to receive first data associated with a source of consumable welding wire within a welding environment. The first data indicates at least one of an identity or a location of the source of consumable welding wire within the welding environment. The first data also indicates at least one of a weight status, indicating a change in weight, or an energization status, indicating an energization state, of the source of consumable welding wire within the welding environment. The at least one server computer is also configured to receive second data associated with a welding power source within the welding environment. The second data indicates at least one of an identity or a location of the welding power source within the welding environment. The second data also indicates an activation status indicating an activation state of the welding power source within the welding environment. The at least one server computer is further configured to match the welding power source to the source of consumable welding wire based on at least the first data and the second data. A match indicates that the welding power source is actively using the source of consumable welding wire during a welding operation within the welding environment. In one embodiment, the networked system also includes a welding wire docking station. The welding wire docking station includes a loading platform configured to accept the source of consumable welding wire. The source of consumable welding wire includes an RFID tag encoded with characteristic information of the source of consumable welding wire. The characteristic information may include at least one of the identity, a wire type, a wire size, a lot code, or a wire density of the source of consumable welding wire, for example. The welding wire docking station also includes an RFID reader configured to read the characteristic information from the RFID tag when the source of consumable welding wire is docked onto the loading platform. The welding wire docking station also includes at least one of a scale and a sensor. The scale is configured to generate the weight status of the source of consumable welding wire when the source of consumable welding wire is docked onto the loading platform. The sensor is configured to generate the energization status, indicating an energization state of the source of consumable welding wire within the welding environment. The welding wire docking station further includes a communication device configured to support communication of the characteristic information and at least one of the weight status or the energization status of the source of consumable welding wire to the at least one server computer as part of the first data.

One embodiment includes a system for relating welding wire to a welding power source in a welding environment. The system includes a welding power source having a first welding output stud and a second welding output stud, a pair of welding power cables, and a wire feeder operatively connected to the first welding output stud and the second welding output stud via the pair of welding power cables. The system also includes a wire docking station configured to accept a replaceable source of consumable welding wire. The source of consumable welding wire may be in the form of, for example, a drum of welding wire, a box of welding wire, or a spool of welding wire. The consumable welding wire of the replaceable source of consumable welding wire is supplied from the wire docking station to the wire feeder. The system includes a welding gun configured to receive the consumable welding wire from the wire feeder. The welding gun includes a contact tip that electrically connects the consumable welding wire to the first welding output stud of the welding power source via the wire feeder forming a contact tip connection. The wire docking station includes a first communication module configured to communicate docking station data to the welding power source over the consumable welding wire, as supported by at least the pair of welding power cables and the contact tip connection. The docking station data includes at least one of an identity of the wire docking station, a location of the wire docking station, a warning or notification message, a weight status, a wire type, a wire size, a lot code, or a wire density of the source of consumable welding wire. In one embodiment, the first communication module of the wire docking station includes a memory that stores at least the docking station data. In one embodiment, the first communication module of the wire docking station includes a transmitter configured to transmit current draw pulses over the consumable welding wire to communicate the docking station data to the welding power source. The welding power source includes a receiver configured to receive the docking station data as the current draw pulses. In one embodiment, the welding power source includes a transmitter configured to transmit voltage pulses over the consumable welding wire to the first communication module of the wire docking station to communicate power source data to the wire docking station. Communication over the consumable welding wire is supported by at least the pair of welding power cables, the contact tip connection, a first electrical connection between the source of consumable welding wire and the first communication module, and a second electrical connection between the first communication module and the second welding output stud of the welding power source. The first communication module of the wire docking station includes a receiver configured to receive the power source data as the voltage pulses. In one embodiment, the wire docking station includes a contact mechanism configured to form the first electrical connection between the source of consumable welding wire and the first communication module. The contact mechanism is operatively configured to make continuous contact with the source of consumable welding wire when loaded in the wire docking station. The second electrical connection between the first communication module of the wire docking station and the second welding output stud of the welding power source is accomplished via at least one of a common building ground, a grounded fixture, or a dedicated electrical return cable. In one embodiment, the wire docking station includes a scale configured to measure a weight status of the source of consumable welding wire, when loaded in the wire docking station, and communicate the weight status to the first communication module. In one embodiment, the wire feeder includes a second communication module configured to communicate with the welding power source over the pair of welding power cables. The second communication module has substantially the same electrical circuit configuration and uses substantially the same communication protocol as that of the first communication module.

One embodiment includes a wire docking station for use in a welding environment. The wire docking station includes a loading platform configured to accept a replaceable source of consumable welding wire. The wire docking station also includes a scale configured to generate a weight status of the source of consumable welding wire when docked with the loading platform. The wire docking station further includes a communication module and a contact mechanism. The contact mechanism is configured to form an electrical connection between the source of consumable welding wire and the communication module. The communication module includes a transmitter configured to transmit docking station data as current draw pulses to a welding power source over the consumable welding wire of the source of consumable welding wire. In one embodiment, the docking station data includes at least one of an identity of the wire docking station, a location of the wire docking station, a warning or notification message, the weight status, a wire type, a wire size, a lot code, or a wire density of the source of consumable welding wire. In one embodiment the contact mechanism includes at least one of an electrically conductive brush or an electrically conductive plate operatively configured to make continuous contact with the source of consumable welding wire when loaded in the wire docking station. In one embodiment, the wire docking station includes an RFID reader operatively connected to the communication module and configured to read at least a portion of the docking station data from an RFID tag on the source of consumable welding wire encoded with the at least a portion of the docking station data. In one embodiment, the communication module includes a receiver configured to receive power source data transmitted as voltage pulses by the welding power source over the consumable welding wire of the source of consumable welding wire.

One embodiment includes a method of monitoring a replaceable source of consumable welding wire. The source of consumable welding wire may be in the form of, for example, a drum of welding wire, a box of welding wire,

or a spool of welding wire. The method includes communicating docking station data from a wire docking station to a welding power source as current draw pulses over a consumable welding wire of a source of consumable welding wire loaded onto the wire docking station. The method also includes communicating power source data from the welding power source to the wire docking station as voltage pulses over the consumable welding wire of the source of consumable welding wire. In one embodiment, the docking station data includes at least one of an identity of the wire docking station, a location of the wire docking station, a warning or notification message, a weight status, a wire type, a wire size, a lot code, or a wire density of the source of consumable welding wire. In one embodiment, the power source data includes at least one of a request message to request the wire docking station to transmit the docking station data over the consumable welding wire or an acknowledgement message to acknowledge that the docking station data has been received by the welding power source. In one embodiment, the communicating between the wire docking station and the welding power supply over the consumable welding wire is supported by a wire feeder, operatively connected to the welding power source via a pair of welding power cables, and a contact tip of a welding gun operatively connected to the wire feeder. The wire feeder and the welding gun receives the consumable welding wire from the wire docking station. According to one embodiment the source of consumable welding wire includes one of a drum of welding wire, a box of welding wire, or a spool of welding wire.

Numerous aspects of the general inventive concepts will become readily apparent from the following detailed description of exemplary embodiments, from the claims, and from the accompanying drawings.

**BRIEF DESCRIPTION OF THE DRAWINGS**

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.

FIG. 1 illustrates a first embodiment of a networked system including a welding environment having stations of welding wire and welding power sources;

FIG. 2 illustrates a second embodiment of a networked system including a welding environment having stations of welding wire and welding power sources;

FIG. 3 illustrates a flowchart of a first embodiment of a method of relating welding wire to a welding power source in a welding environment;

FIG. 4 illustrates a flowchart of a second embodiment of a method of relating welding wire to a welding power source in a welding environment;

FIG. 5 illustrates one embodiment of an example server computer that may be used as the server computers in the networked system of FIG. 1 or in the networked system of FIG. 2;

FIG. 6 illustrates a schematic block diagram of a system for relating welding wire to a welding power source in a welding environment;

FIG. 7 illustrates a schematic block diagram of one embodiment of a communication module of the system of FIG. 6;

FIG. 8 illustrates a schematic block diagram of one embodiment of a welding power source of the system of FIG. 6; and

FIG. 9 illustrates a flowchart of one embodiment of a method of monitoring a replaceable source of consumable welding wire using the system of FIG. 6.

**DETAILED DESCRIPTION**

Embodiments of systems and methods to identify particular sources of consumable welding wire that are actively being consumed by particular welding power sources in a welding environment are disclosed. In one embodiment, an identity and/or a location of a source of consumable welding wire within the welding environment, along with a weight status of the source of consumable welding wire, are received as first data at a server computer. An identity and/or a location of a welding power source within the welding environment, along with an activation status of the welding power source, are received as second data at the server computer. The server computer analyzes the first data and the second data to determine whether the welding power source is actively using the source of consumable welding wire during a welding operation within the welding environment.

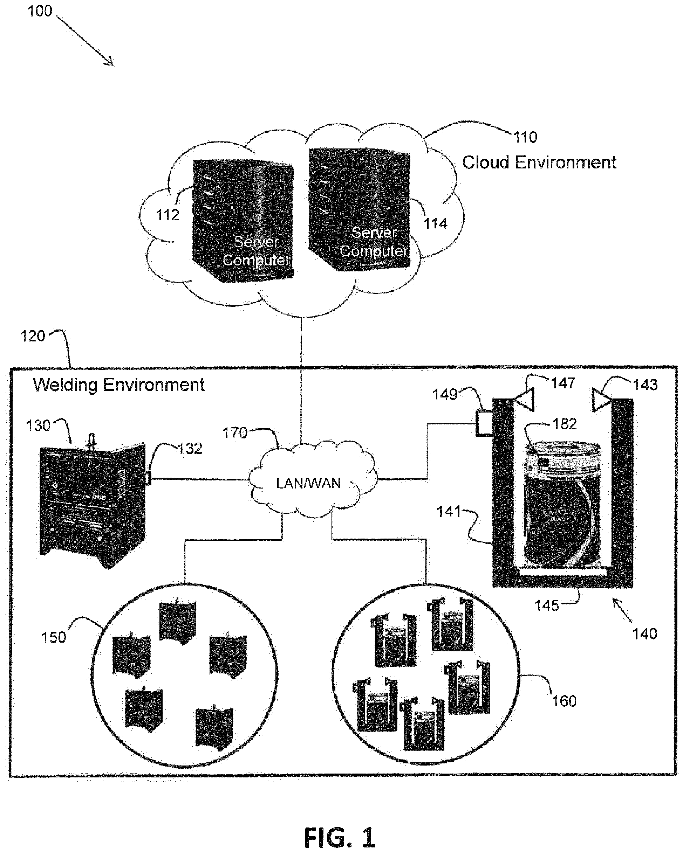

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIG. 1 illustrates a first embodiment of a networked system 100 including a welding environment having stations of welding wire and welding power sources.

Referring to FIG. 1, the networked system 100 includes a cloud environment 110 and a welding environment 120. The cloud environment 110 includes a first server computer 112 and a second server computer 114. For example, the server computers 112 and 114 may exist remotely from the welding environment 120 as part of a server farm and communicate with the welding environment via the internet. The server computers 112 and 114 are configured to receive data from the welding environment 120, process the data, and send other data back to the welding environment, in accordance with one embodiment. In accordance with other embodiments, one, three, or more server computers may exist in the cloud environment 100 which are configured to receive data from the welding environment 120 and send other data back to the welding environment. The server computers have at least one processor configured to execute computer-executable instructions to perform various functions that are described herein.

The welding environment 120 may exist, for example, within a factory or within a portion of a factory. In FIG. 1, the welding environment 120 includes a welding power source 130, a welding wire docking station 140, other welding power sources 150, other welding wire docking stations 160, and a computer network 170 such as, for example, a local area network (LAN), a wide area network (WAN), or some combination thereof. The computer network 170 is configured to provide networked communications between the elements of the welding environment 120 (e.g., between the welding power source 130, the welding wire docking station 140, the other welding power sources 150, and the other welding wire docking stations 160). The computer network 170 is also configured to provide networked communications between the welding environment 120 and the cloud environment 110. It is assumed herein that the welding power sources are configured to be interfaced, directly or indirectly, to other equipment for use during a welding operation. The other equipment may include, for example, welding wire feeders and welding guns or torches.

The welding power source 130 and each of the other welding power sources 150 are configured to communicate with the server computers in the cloud environment 110 via the computer network 170. In one embodiment, each of the welding power sources includes a communication module 132 configured to communicate the information related to the respective welding power source to the server computers 112 and/or 114 in the cloud environment 110 as digital data via the computer network 170. The communicated information may include, for example, an identity and a location of the respective welding power source and an activation status, indicating an activation state of the welding power source, within the welding environment 120. The activation status may be "active" or "inactive", for example, where the "active" status indicates that the welding power source has been activated by a user to apply electrical power to a source of consumable welding wire 180 (e.g., when an arc is initiated when an operator pulls a trigger on a welding gun). The communicated information may also include, for example, a welding mode, a welding voltage, a welding current, a welding duration, and/or a welding wire feed speed. The information, as communicated, may be in the form of digital data, in accordance with one embodiment. Therefore, in one embodiment, the communication device 132 is a digital communication device such as, for example, a router. Communication may be wired (e.g. copper, fiber optic) or wireless (e.g., WiFi, Bluetooth®), in accordance with various embodiments.

In one embodiment, the welding wire docking station 140 includes a loading platform 141, an RFID reader 143, a scale 145, a sensor 147, and a communication device 149. As shown in FIG. 1, the loading platform 141 of the welding wire docking station 140 is loaded with a source of consumable welding wire 180 in the form of a drum of welding wire. Alternatively, the welding wire docking station 140 may be loaded with a source of consumable welding wire 180 in the form of a box of welding wire or a spool of welding wire, for example. The wire within the source of consumable welding wire 180 may be fed to the welding power source 130 (or to one of the other welding power sources 150) to be used (consumed) during a welding operation. Similarly, any of the other sources of consumable welding wire loaded on the other welding wire docking stations 160 may be fed to the welding power source 130 or to any of the other welding power sources 150 to be used (consumed) during welding operations.

The loading platform 141 is configured to accept a source of consumable welding wire 180, for example, from a person or a robot on the floor of the welding environment 120. In one embodiment, the source of consumable welding wire 180 includes an RFID tag 182 encoded with characteristic information of the source of consumable welding wire 180. The characteristic information may include, for example, an identity, a wire type, a wire size, a lot code, or a wire density of the source of consumable welding wire 180. In one embodiment, the RFID reader 143 is configured to read the characteristic information from the RFID tag 182 when the source of consumable welding wire 180 is docked with the loading platform 141. The characteristic information, as read, may be in the form of digital data, in accordance with one embodiment.

In one embodiment, the scale 145 is configured to generate a weight status of the source of consumable welding wire 180 as the source of consumable welding wire 180, docked with the loading platform 141, is consumed via a welding power source during a welding operation. In accordance with various embodiments, the weight status indicates a weight or a change in weight of the source of consumable welding wire 180 within the welding environment. The weight status may be in the form of digital data, in accordance with one embodiment.

In one embodiment, the sensor 147 is configured to generate an energization status, indicating an energization state of the source of consumable welding wire 180 when the source of consumable welding wire 180 is docked with the loading platform 141. In accordance with one embodiment, the energization state may be "energized" or "not energized". The energization state indicates that the source of consumable welding wire 180 is being electrically energized by a welding power source within the welding environment. For example, the source of consumable welding wire 180 may be energized by the welding power source 130 during a welding operation when the welding power source is activated ("active" status) and as the welding wire is fed by a wire feeder toward a workpiece (e.g., when the welding wire is connected to an activated welding power source). The energization status may be in the form of digital data, in accordance with one embodiment.

The sensor 147 may be, for example, a magnetic sensor, an electromagnetic sensor, or a voltage sensor, in accordance with various embodiments. The magnetic sensor and the electromagnetic sensor are configured to detect magnetic or electromagnetic fields, respectively, given off by the source of consumable welding wire when energized. The voltage sensor is configured to detect a welding voltage on the source of consumable welding wire when energized. In accordance with another embodiment, the sensor 147 may be configured to read a coded signal transmitted by the welding power source on the wire of the source of consumable welding wire when the welding power source is activated. The coded signal indicates, for example, energization of the source of consumable welding wire.

In one embodiment, the communication device 149 is configured to communicate the characteristic information of the source of consumable welding wire 180, along with the weight status and/or the energization status of the source of consumable welding wire 180, to the server computers 112 and/or 114 in the cloud environment 110 as digital data via the computer network 170. The location of the welding wire docking station 140 within the welding environment may also be communicated (thus indicating the location of the source of consumable welding wire 180). For example, data indicating the location of the welding wire docking station 140 may be stored in a memory of the communication device 149, in accordance with one embodiment. In one embodiment, the communication device 149 is a digital communication device such as, for example, a router. Communication may be wired (e.g. copper, fiber optic) or wireless (e.g., WiFi, Bluetooth®), in accordance with various embodiments.

The digital data from the source of consumable welding wire 180 and docking station 140 (or from the other sources of consumable welding wire and docking stations 160) to the server computers 112 and/or 114 may be considered to be "first data". Therefore, the first data represents an identity and/or a location of a consumable source(s) of welding wire as well as a weight status and/or an energization status of the consumable source(s) of welding wire. The digital data from the welding power source 130 (or from the other welding power sources 150) to the server computers 112 and/or 114 may be considered to be "second data". Therefore, the second data represents an identity and/or a location of a welding power source(s) as well as an activation status of the welding power source(s). The second data may also include representations of a welding voltage, a welding current, a welding mode, and/or a wire feed speed associated with the welding power source(s).

The server computers 112 and/or 114 in the cloud environment 110, having received the first data and the second data from the welding environment 120 (e.g., over the internet), are configured to (i.e., include logic/intelligence to) correlate or match a welding power source to a source of consumable welding wire based on the first data and the second data. Such matching indicates that a particular welding power source is actively using a particular source of consumable welding wire during a welding operation within the welding environment. That is, the matching indicates from which particular source of consumable welding wire in the welding environment a particular welding power source is drawing wire (e.g., via a wire feeder).

In this manner, any welding power source can be matched to any source of consumable welding wire being used by the welding power source in the welding environment. That is, a welding environment having multiple welding power sources and multiple sources of consumable welding wire on docking stations can report to the cloud environment 110 and the cloud environment can discern which welding power sources are using which sources of consumable welding wire. In one embodiment, the cloud environment records and tracks all associated information for quality purposes. No human intervention is used to make any matches, associations, or correlations.

The various portions of the first data (identity, location, weight status, energization status) may be time stamped, in accordance with one embodiment. Similarly, the various portions of the second data (identity, location, activation status, welding voltage, welding current, welding mode, wire feed speed) may be time stamped, in accordance with one embodiment. The time stamps help the server computers with the matching process. For example, if the first data indicates that a source of consumable welding wire 180 was energized at a first time, and the second data indicates that a welding power source 130 was activated at a second time which is within a few milliseconds of the first time, then it is likely that the welding power source 130 is using the source of consumable welding wire 180. Such a match may be verified by confirming that the weight status for the source of consumable welding wire 180 is now indicating a reduction in weight over time (i.e., as the welding wire is being consumed during a welding operation), whereas just previously the weight was unchanging. Furthermore, by knowing the wire feed speed associated with a welding power source that is matched to a source of consumable welding wire, a length of welding wire used over a period of time may be determined.

By knowing which welding power sources are using which sources of consumable welding wire within the welding environment, various operational statistics can be tracked by the server computers and various decisions can be made with respect to managing the welding environment. For example, in one embodiment, the server computers are able to estimate when a welding wire docking station is likely to run out of welding wire based on a current weight of the corresponding source of consumable welding wire and a rate of change of the weight. Using such information, a manager of the welding environment (or the server computers themselves) can order a replacement source of consumable welding wire to be moved to the corresponding welding wire docking station. Other estimations, determinations, and decisions can also be made based on knowing which welding power sources are matched to which sources of consumable welding wire within a welding environment, in accordance with various embodiments.

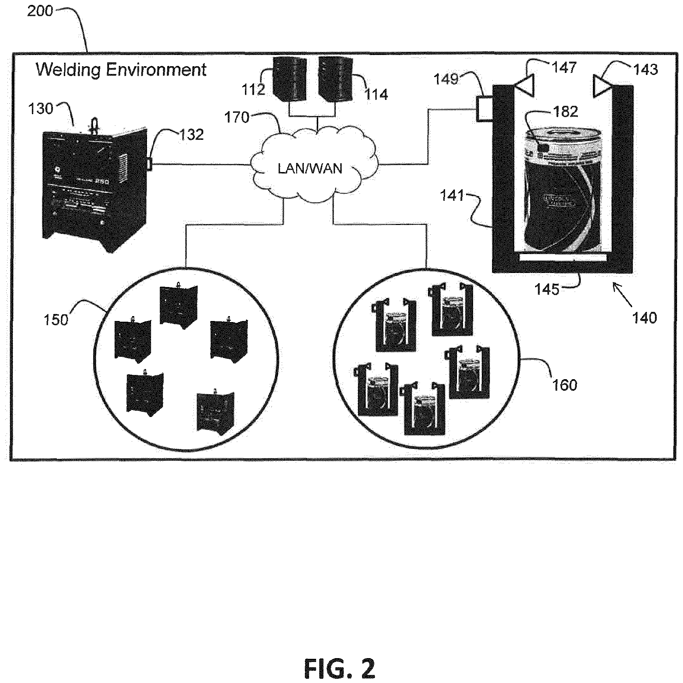

FIG. 2 illustrates a second embodiment of a networked system 200 including a welding environment having stations of welding wire and welding power sources. The networked system 200 of FIG. 2 is similar to the networked system 100 of FIG. 1 except that the networked system 200 is entirely within the welding environment. The server computers 112 and 114 are no longer in a cloud environment but, instead, are part of the welding environment. Such a networked system 200 may be desirable, for example, when the cost associated with paying for resources in a cloud environment are too high over time, or when internet access is unavailable or unreliable. However, the functionality of collecting data and matching welding power sources to sources of consumable welding wire may be essentially the same for both the networked system 100 of FIG. 1 and the networked system 200 of FIG. 2. Furthermore, even though the term "server computer" is used herein, with respect to FIG. 2, other types of equivalent computers (which are not technically server computers) may be used instead to perform the associated functions described herein, in accordance with various other embodiments.

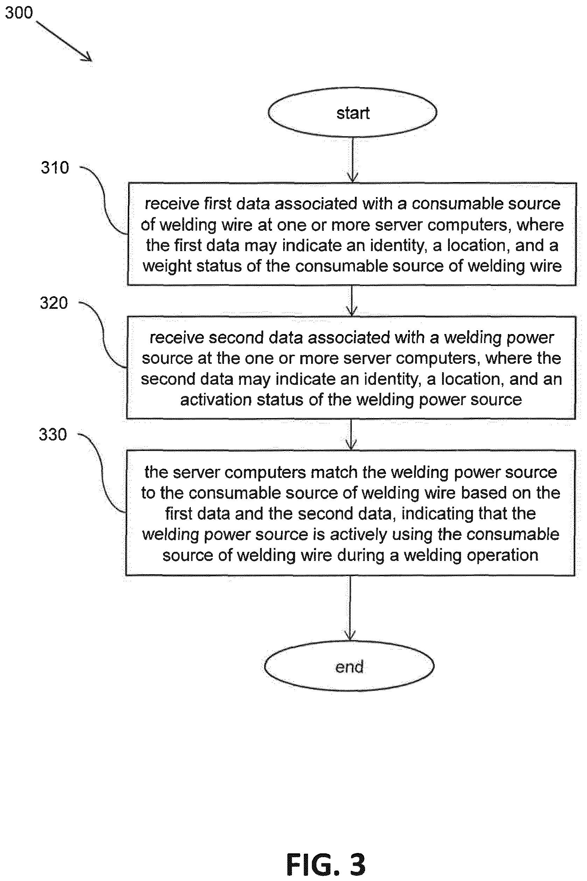

FIG. 3 illustrates a flowchart of a first embodiment of a method 300 of relating welding wire to a welding power source in a welding environment. At block 310, one or more server computers receive first data associated with a source of consumable welding wire in the welding environment. The first data may indicate an identity, a location, and a weight status of the source of consumable welding wire. In one embodiment, the weight status indicates a change in weight of the source of consumable welding wire within the welding environment. In other embodiments, the weight status may indicate an absolute weight (e.g., 476 lbs.) or a relative weight (e.g., 78% of maximum) of the source of consumable welding wire within the welding environment.

At block 320, the one or more server computers receive second data associated with a welding power source. The second data may indicate an identity, a location, and an activation status of the welding power source. The activation status indicates an activation state (e.g., active or not active) of the welding power source within the welding environment. At block 330, the server computers match the welding power source to the source of consumable welding wire based on the first data and the second data. The match indicates that the welding power source is actively using the source of consumable welding wire during a welding operation. The method 300 may be performed by one or more of the server computers in the cloud environment of FIG. 1 or in the welding environment of FIG. 2, for example.

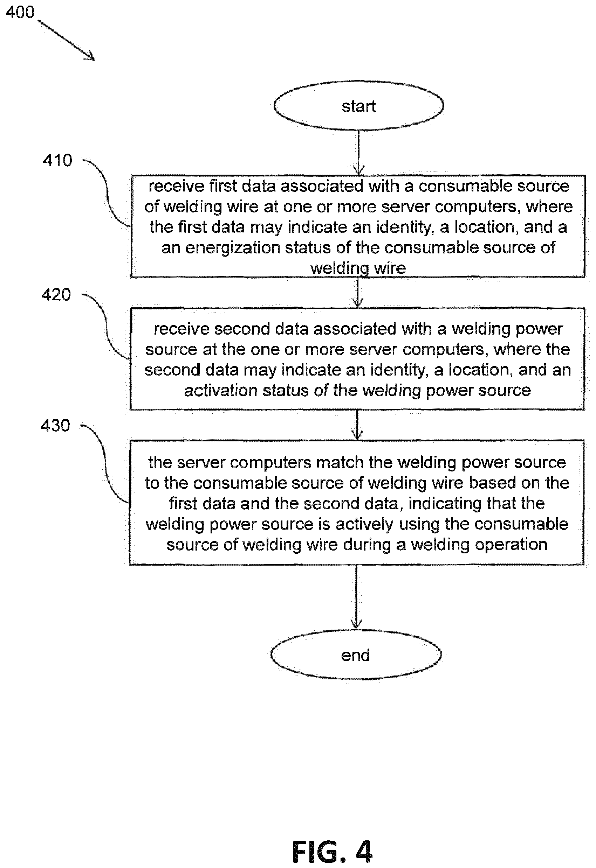

FIG. 4 illustrates a flowchart of a second embodiment of a method 400 of relating welding wire to a welding power source in a welding environment. At block 410, one or more server computers receive first data associated with a source of consumable welding wire in the welding environment. The first data may indicate an identity, a location, and an energization status of the source of consumable welding wire. In one embodiment, the energization status indicates an energization state (e.g., energized or not energized) of the source of consumable welding wire within the welding environment.

At block 420, the one or more server computers receive second data associated with a welding power source. The second data may indicate an identity, a location, and an activation status of the welding power source. The activation status indicates an activation state (e.g., active or not active) of the welding power source within the welding environment. At block 430, the server computers match the welding power source to the source of consumable welding wire based on the first data and the second data. The match indicates that the welding power source is actively using the source of consumable welding wire during a welding operation. The method 400 may be performed by one or more of the server computers in the cloud environment of FIG. 1 or in the welding environment of FIG. 2, for example.

As an example, a server computer operating on the first data and the second data may determine that an energization status of a source of consumable welding wire in the welding environment was changed from "not energized" to "energized" at practically the same time that an activation status of a welding power source in the welding environment changed from "non-active" to "active". Such a determination may be indicative of a match, indicating that the welding power source is actively using the source of consumable welding wire during a welding operation. In accordance with one embodiment, the match may be confirmed by checking a time-stamped weight status, if available, of the source of consumable welding wire.

As another example, a server computer operating on the first data and the second data may determine that a weight status of a source of consumable welding wire in the welding environment began indicating a change in weight at practically the same time that an activation status of a welding power source in the welding environment changed from "non-active" to "active". Such a determination may be indicative of a match, indicating that the welding power source is actively using the source of consumable welding wire during a welding operation. In accordance with one embodiment, the match may be confirmed by checking a time-stamped energization status, if available, of the source of consumable welding wire.

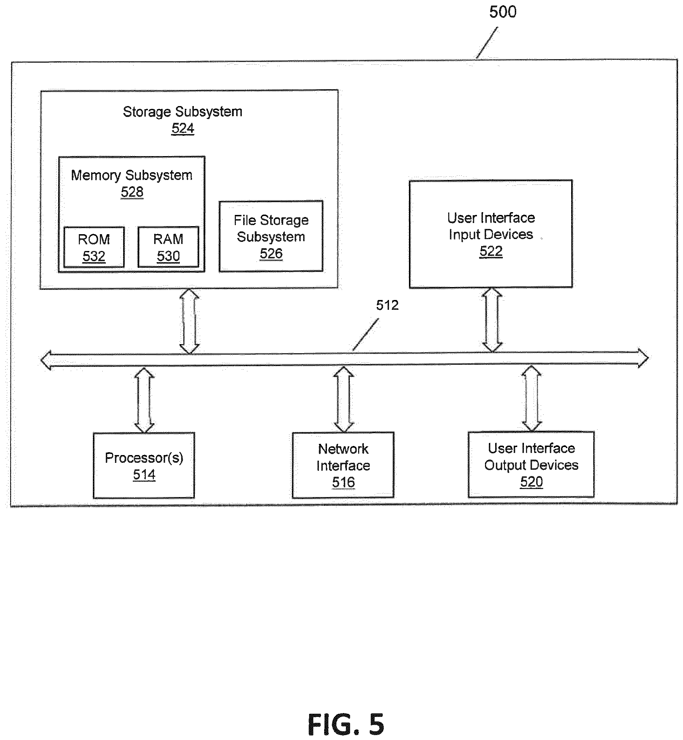

FIG. 5 illustrates an embodiment of an example server computer 500 that may be used as the server computer 112 and/or 114 in the networked system 100 of FIG. 1, or in the networked system 200 of FIG. 2. The server computer 500 includes at least one processor 514 which communicates with a number of peripheral devices via bus subsystem 512. These peripheral devices may include a storage subsystem 524, including, for example, a memory subsystem 528 and a file storage subsystem 526, user interface input devices 522, user interface output devices 520, and a network interface subsystem 516. The input and output devices allow user interaction with the server computer 500. Network interface subsystem 516 provides an interface to outside networks and is coupled to corresponding interface devices in other computer systems. For example, the welding power source 130 of the networked system 100 may share one or more characteristics with the server computer 500 and may include, for example, elements of a conventional computer, a digital signal processor, and/or other computing device.

User interface input devices 522 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the server computer 500 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the server computer 500 to the user or to another machine or computer system.

Storage subsystem 524 stores programming and data constructs that provide some or all of the server computer functionality described herein. For example, the storage subsystem 524 may include one or more software modules including computer executable instructions for matching a welding power source to a source of consumable welding wire.

These software modules are generally executed by processor 514 alone or in combination with other processors. Memory subsystem 528 used in the storage subsystem can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 526 in the storage subsystem 524, or in other machines accessible by the processor(s) 514.

Bus subsystem 512 provides a mechanism for letting the various components and subsystems of the server computer 500 communicate with each other as intended. Although bus subsystem 512 is shown schematically as a single bus, alternative embodiments of the bus subsystem may use multiple buses.

The server computer 500 can be of various implementations including a single conventional server computer, a single workstation, a part of a computing cluster, a blade server, a part of a server farm, or any other data processing system or computing device configured to perform the server computer functions described herein. Due to the ever-changing nature of computing devices and networks, the description of the server computer 500 depicted in FIG. 5 is intended only as a specific example for purposes of illustrating some embodiments. Many other configurations of the server computer 500 are possible having more or fewer components than the server computer depicted in FIG. 5.

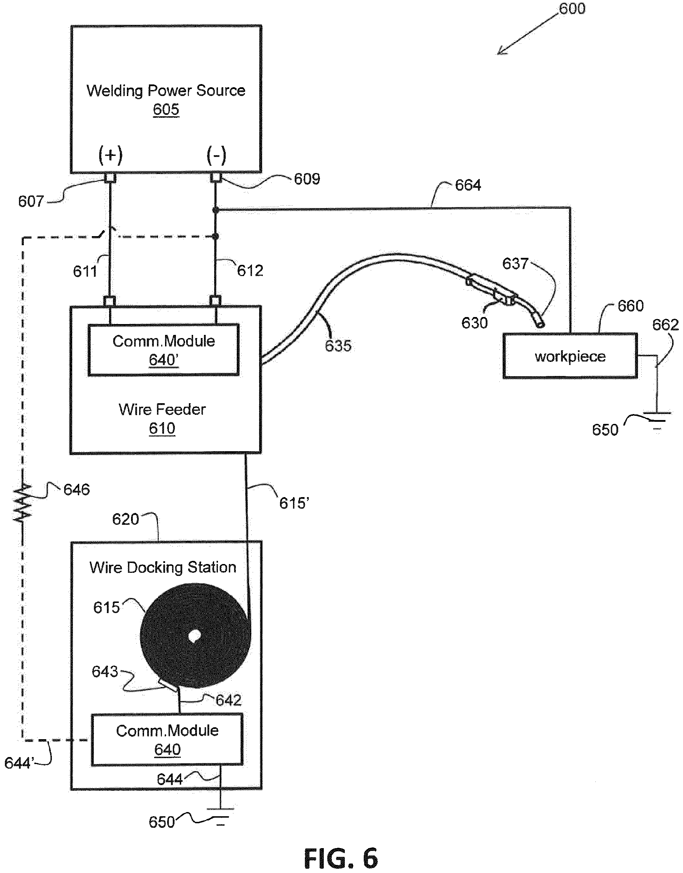

FIG. 6 illustrates a schematic block diagram of a system 600 for relating welding wire to a welding power source in a welding environment. In the system 600 of FIG. 6, information is provided to a welding power source from a wire docking station such that an operator of the welding power source (or, for example, an inventory control person) can be notified about the status of a source of consumable welding wire provided by the wire docking station for welding. For example, an inventory control person can make sure the wire docking station gets reloaded with welding wire before the present source of consumable welding wire runs out, without interfering with the operator of the welding power source.

The system 600 includes a welding power source 605 having a first welding output stud 607 and a second welding output stud 609 which provide welding output power during a welding operation. The term "welding output stud" is used predominantly herein. However, other equivalent terms may include, for example, "welding output port", "welding output", or "welding power output". In FIG. 6, the first welding output stud 607 is shown as having a positive (+) polarity and the second welding output stud 609 is shown as having a negative (-) polarity. However, in other embodiments, the polarities may be reversed.

The system 600 also includes a wire feeder 610 operatively connected to the first welding output stud 607 and the second welding output stud 609 via a pair of welding power cables 611 and 612. In some embodiments, the pair of welding cables 611 and 612 may be enclosed into a seemingly single welding power cable, however. The system 600 further includes a wire docking station 620 into which (or onto which) a source of consumable welding wire 615 can be loaded or docked (e.g., to replace a previous source of consumable welding wire that has been consumed). The wire docking station 620 may be similar, in at least some respects, to the wire docking station 140 of FIG. 1, in accordance with some embodiments. Also, the source of consumable welding wire 615 may be similar to the source of consumable welding wire 180 of FIG. 1, for example. The source of consumable welding wire 615 can be used by the welding power source 605 via the wire feeder 610 during a welding operation or during a communication operation, in accordance with one embodiment. That is, the consumable welding wire 615' of the source of consumable welding wire 615 can be supplied from the wire docking station 620 to the wire feeder 610. As referred to herein, the consumable welding wire 615' is that portion of the source of consumable welding wire 615 that is currently being fed from the wire docking station 620 to the wire feeder 610 and beyond (i.e., to a welding gun). The source of consumable welding wire 615 may be in the form of, for example, a drum of welding wire, a box of welding wire, or a spool of welding wire. Other forms are possible as well, in accordance with various other embodiments.

The system 600 also includes a welding gun 630 configured to receive the consumable welding wire 615' from the wire feeder 610 (e.g., via a hose 635). The welding gun 630 includes a contact tip 637 (within the gun) that electrically connects the consumable welding wire 615' to the first welding output stud 607 of the welding power source 605 via the wire feeder 610 to form a contact tip connection. In this manner, the consumable welding wire 615' (and the entire source of consumable welding wire 615) is electrically connected to the welding power source 605. Any voltage applied to the first welding output stud 607 at the welding power source 605 will also appear on the consumable welding wire 615' and, therefore, on the source of consumable welding wire 615.

The hose 635 may contain the consumable welding wire 615', a wire conduit (not shown), a gas line (not shown), and a welding gun trigger switch connection (not shown). In another embodiment, the hose 635 does not include a gas line. In yet another embodiment, the hose 635 may include a control cable (not shown) configured to connect the welding gun 630 to at least one of the following: the welding power source 605, the wire feeder 610, or a gas supply (not shown). The hose 635 can be any diameter and length configured to contain the welding wire 615', the gas hose, and the switch connection. In one embodiment, the hose 635 is made of any material suitable for welding environments. It is understood that the hose 635 and the welding gun 630 may have any configuration suitable for supplying welding wire, welding gas, and controls through the hose 635 and to the welding gun 630.

The wire docking station 620 includes a first communication module 640 (Comm. Module) configured to communicate docking station data to the welding power source 605 over the consumable welding wire 615', as supported by at least the pair of welding power cables 611 and 612 and the contact tip connection at contact tip 637. The docking station data may include, for example, at least one of an identity of the wire docking station, a location of the wire docking station, or a warning or notification message (e.g., "replace welding wire soon" or "low welding wire"). The docking station data may also include, for example, at least one of a weight status, a wire type, a wire size, a lot code, or a wire density of the source of consumable welding wire 615. Other types of docking station data are possible as well, in accordance with other embodiments. In general, the welding power source 605 wants to know which wire docking station it is connected to (if any), what type of welding wire is loaded on the wire docking station (if any), and how much welding wire is left in the wire docking station (if any). Communication of the docking station data from the wire docking station 620 to the welding power source 605 is discussed in detail later herein.

In accordance with one embodiment, data communications between the wire docking station 620 and the welding power source 605 do not take place during a welding operation (i.e., communications do not take place when welding power is being supplied from the welding power source 605 to the wire feeder 610 to perform a welding operation). Welding operations and communication operations take place at different times. Furthermore, communication operations between the welding power source 605 and the wire docking station 620 are structured (e.g., in a hand-shaking manner) and follow a defined communication protocol, in accordance with one embodiment.

The wire docking station 620 provides a first electrical connection between the source of consumable welding wire 615 and the first communication module 640. The first electrical connection is accomplished by an electrical wire or cable 642 and a contact mechanism 643 configured to make continuous contact with the source of consumable welding wire 615 when the source of consumable welding wire 615 is loaded in the wire docking station 620. In one embodiment, the contact mechanism 643 is an electrically conductive brush that presses against an outer surface of the source of consumable welding wire 615, making both physical and electrical contact. In another embodiment, the contact mechanism 643 is an electrically conductive plate that makes both physical and electrical contact with an outer surface of the source of consumable welding wire 615. For example, the contact mechanism 643 may be an electrically conductive plate upon which the source of consumable welding wire 615 sits when docked in the wire docking station 620. Other embodiments of contact mechanisms 643 are possible as well. In this manner, even though the source of consumable welding wire 615 is being consumed over time, an electrical connection between the source of consumable welding wire 615 and the first communication module 640 is maintained (e.g., at least until the source of consumable welding wire 615 is depleted) to support communication over the consumable welding wire 615'.

The wire docking station 620 also provides a second electrical connection between the first communication module 640 and the second welding output stud 609 of the welding power source 605 to support communication between the wire docking station 620 and the welding power source 605. An electrical connection between two points in the system 600 does not imply that there is necessarily a direct physical connection between the two points to accomplish the electrical connection. For example, in one embodiment, the second electrical connection is accomplished indirectly via a common building electrical ground 650. Referring to FIG. 6, a workpiece 660 to be welded is electrically connected to a common building electrical ground 650 and also to the second welding output stud 609 or the welding power cable 612 (e.g. via electrical cables 662 and 664, respectively). Furthermore, the first communication module 640 is also electrically connected to the common building electrical ground 650 via an electrical wire or cable 644. In one embodiment, the common building electrical ground 650 may be accessed, for example, via one or more grounded fixtures. In this manner, the second electrical connection is indirectly provided between the first communication module 640 and the second welding output stud 609 of the welding power source 605 to support communications.

Alternatively, the second electrical connection may be accomplished more directly by an electrical wire or cable 644' connected between the communication module 640 and the welding power cable 612 or the second welding output stud 609, for example. In another embodiment, the second electrical connection may be accomplished by connecting the electrical wire or cable 644' between the communication module 640 and an appropriate electrical point on the wire feeder 610 which is connected to the second welding output stud 609 (e.g., via the welding power cable 612). In accordance with some embodiments, the electrical wire or cable 644' may include a resistive device 646 (e.g., a large valued resistor) providing an appropriate level of resistance in accordance with sound electrical design principles. Furthermore, in accordance with some embodiments, the electrical wire or cable 644 (to common building electrical ground 650) may include a similar resistive device 646.

In this manner, the various electrical connections discussed above herein facilitate communication between the first communication module 640 of the wire docking station 620 and the welding power source 605. That is, communication between the wire docking station 620 and the welding power source 605 is accomplished over the consumable welding wire 615' of the source of consumable welding wire 615 as supported by the pair of welding power cables 611 and 612, the contact tip connection at 637, the first electrical connection between the source of consumable welding wire and the first communication module 640, and the second electrical connection between the first communication module 640 and the second welding output stud 609.

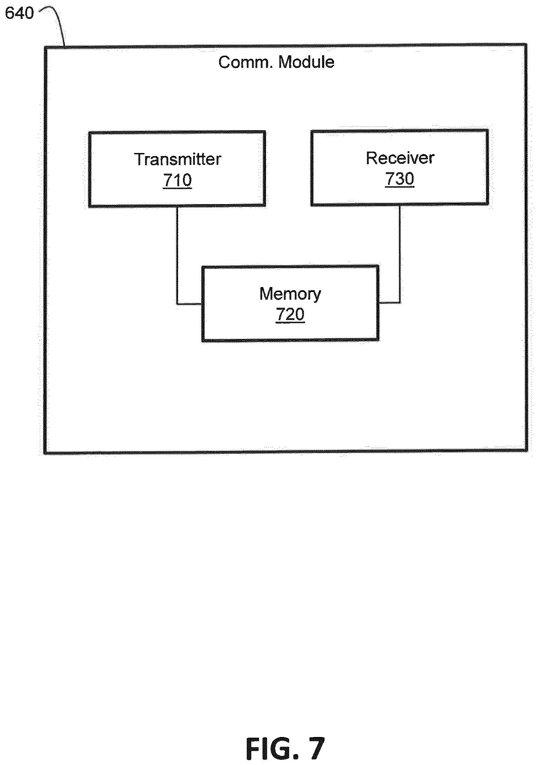

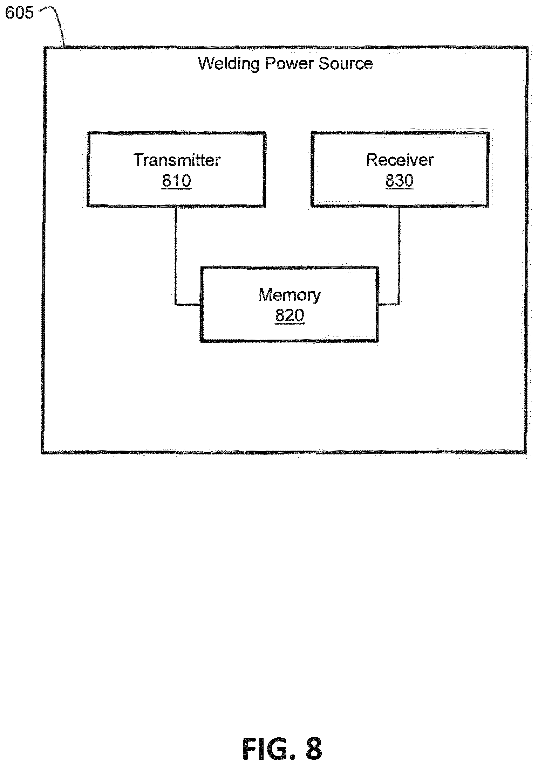

In accordance with one embodiment, the wire feeder 610 includes a second communication module 640'. The second communication module 640' is configured to communicate with the welding power source 605 over the pair of welding power cables 611 and 612. In one embodiment, the second communication module 640' has the same electrical circuit configuration and uses the same communication protocol as that of the first communication module 640 of the wire docking station 620. In one embodiment, the first communication module 640 is effectively electrically connected in parallel with the second communication module 640'. As a result, the first communication module 640 and the second communication module 640' both "see" data transmitted from the welding power source 605. However, data from the welding power source 605 intended for the wire feeder 610 may be ignored by the wire docking station 620. Similarly, data from the welding power source 605 intended for the wire docking station 620 may be ignored by the wire feeder 610. Details of the electrical circuit configuration and the communication protocol of the communication modules 640 and 640' are discussed later herein with respect to at least FIG. 7 and FIG. 8, and also with respect to U.S. Published Patent Application 2017/0120363 A1, published on May 4, 2017 and having serial number 15/294,649, which is incorporated by reference herein in its entirety.

FIG. 7 illustrates a schematic block diagram of one embodiment of the first communication module 640 of the system 600 of FIG. 6. Embodiments of the first communication module may include other components or elements that are not shown in FIG. 7, however. Again, the second communication module 640' may be configured the same as (or substantially similar to) the first communication module 640, in accordance with some embodiments. The first communication module 640 of the wire docking station 620 includes a transmitter 710. The transmitter 710 is configured to transmit current draw pulses over the consumable welding wire 615' to communicate the docking station data to the welding power source 605. The first communication module 640 also includes a memory 720 storing at least the docking station data which is accessible by the transmitter 710. Transmission of the current draw pulses over the consumable welding wire 615' to the welding power source 605 is supported by the pair of welding power cables 611 and 612, the contact tip connection to the contact tip 637, the first electrical connection between the source of consumable welding wire 615 and the first communication module 640, and the second electrical connection between the first communication module 640 and the second welding output stud 609.

An example of a configuration of a transmitter in a communication module that is configured to transmit current draw pulses is disclosed in U.S. Published Patent Application 2017/0120363 A1, published on May 4, 2017 and having serial number 15/294,649, which is incorporated by reference herein in its entirety. For example, refer to at least FIG. 1, FIG. 4, and FIG. 5 (and the corresponding descriptive paragraphs) of U.S. Published Patent Application 2017/0120363 A1. Furthermore, FIG. 2 (and the corresponding descriptive paragraphs) of U.S. Published Patent Application 2017/0120363 A1 discloses an example of current draw pulses (a current signal communication waveform). In accordance with various embodiments, the pulse widths, the peak currents, the current level durations, the pulse periods, and/or the frequency of the current draw pulses can be varied by the first communication module 640 according to a communication protocol (e.g., a binary communication protocol). The current draw pulses represent the docking station data (e.g., a weight status of the source of consumable welding wire 615) from the wire docking station 620 which can be received and recognized by the welding power source 605.

The first communication module 640 also includes a receiver 730 configured to receive power source data over the consumable welding wire 615' as voltage pulses transmitted by the welding power source 605. Reception of the voltage pulses over the consumable welding wire 615' is supported by the pair of welding power cables 611 and 612, the contact tip connection to the contact tip 637, the first electrical connection between the source of consumable welding wire 615 and the first communication module 640, and the second electrical connection between the first communication module 640 and the second welding output stud 609. The power source data may include, for example, a request message to request that the wire docking station 620 transmit the docking station data over the consumable welding wire 615', or an acknowledgement message to acknowledge that the docking station data has been received by the welding power source 605.

An example of a configuration of a receiver in a communication module that is configured to receive voltage pulses is disclosed in U.S. Published Patent Application 2017/0120363 A1, published on May 4, 2017 and having serial number 15/294,649, which is incorporated by reference herein in its entirety. For example, refer to at least FIG. 1 (and the corresponding descriptive paragraphs) of U.S. Published Patent Application 2017/0120363 A1. Furthermore, FIG. 3 (and the corresponding descriptive paragraphs) of U.S. Published Patent Application 2017/0120363 A1 discloses an example of voltage pulses (a voltage signal communication waveform). In accordance with various embodiments, the pulse widths, the voltage levels, the voltage level durations, the pulse periods, and/or the frequency of the voltage pulses can be varied by the welding power source 605 according to a communication protocol (e.g. a binary communication protocol). The voltage pulses represent the power source data (e.g., a request message or an acknowledgement message), from the welding power source 605, which can be received and recognized by the receiver 730 of the communication module 640.

FIG. 8 illustrates a schematic block diagram of one embodiment of the welding power source 605 of the system 600 of FIG. 6. Embodiments of the welding power source may include other components or elements that are not shown in FIG. 7, however. The welding power source 605 includes a transmitter 810. The transmitter 810 is configured to transmit voltage pulses over the consumable welding wire 615' to communicate the power source data to the first communication module 640 of the wire docking station 620. The welding power source 605 also includes a memory 820 storing at least the power source data which is accessible by the transmitter 810. Transmission of the voltage pulses over the consumable welding wire 615' to the wire docking station 620 is supported by the pair of welding power cables 611 and 612, the contact tip connection to the contact tip 637, the first electrical connection between the source of consumable welding wire 615 and the first communication module 640, and the second electrical connection between the first communication module 640 and the second welding output stud 609.

An example of a configuration of a transmitter in a welding power source that is configured to transmit voltages pulses is disclosed in U.S. Published Patent Application 2017/0120363 A1, published on May 4, 2017 and having serial number 15/294,649, which is incorporated by reference herein in its entirety. For example, refer to at least FIG. 1 (and the corresponding descriptive paragraphs) of U.S. Published Patent Application 2017/0120363 A1. Furthermore, FIG. 3 (and the corresponding descriptive paragraphs) of U.S. Published Patent Application 2017/0120363 A1 discloses an example of voltage pulses (a voltage signal communication waveform). In accordance with various embodiments, the pulse widths, the peak voltages, the voltage level durations, the pulse periods, and/or the frequency of the voltage pulses can be varied by the transmitter 810 according to a communication protocol (e.g., a binary communication protocol). The voltage pulses represent the power source data (e.g., a request message and an acknowledgement message) from the welding power source 605 which can be received and recognized by the first communication module 640 of the wire docking station 620.

The welding power source 605 also includes a receiver 830 configured to receive docking station data over the consumable welding wire 615' as current draw pulses transmitted by the first communication module 640 of the wire docking station 620. Reception of the current draw pulses over the consumable welding wire 615' is supported by the pair of welding power cables 611 and 612, the contact tip connection to the contact tip 637, the first electrical connection between the source of consumable welding wire 615 and the first communication module 640, and the second electrical connection between the first communication module 640 and the second welding output stud 609. Again, the docking station data may include, for example, at least one of an identity of the wire docking station 620, a location of the wire docking station 620, a warning or notification message, a weight status, a wire type, a wire size, a lot code, or a wire density of the source of consumable welding wire 615. Other types of docking station data are possible as well, in accordance with other embodiments.

An example of a configuration of a receiver in a welding power source that is configured to receive current draw pulses is disclosed in U.S. Published Patent Application 2017/0120363 A1, published on May 4, 2017 and having serial number 15/294,649, which is incorporated by reference herein in its entirety. For example, refer to at least FIG. 1 (and the corresponding descriptive paragraphs) of U.S. Published Patent Application 2017/0120363 A1. Furthermore, FIG. 2 (and the corresponding descriptive paragraphs) of U.S. Published Patent Application 2017/0120363 A1 discloses an example of current draw pulses (a current signal communication waveform). In accordance with various embodiments, the pulse widths, the current levels, the current level durations, the pulse periods, and/or the frequency of the current draw pulses can be varied by the first communication module 640 of the wire docking station 620 according to a communication protocol (e.g. a binary communication protocol). The current draw pulses represent the docking station data (e.g., a weight status of the source of consumable welding wire 615), from the wire docking station 620, which can be received and recognized by the receiver 830 of the welding power source 605.

In one embodiment, the wire docking station 620 has similarities to the wire docking station 140 of FIG. 1. For example, in one embodiment, the wire docking station 620 includes a loading platform, similar to the loading platform 141 of FIG. 1, configured to be loaded with (accept) the replaceable source of consumable welding wire 615. Also, in one embodiment, the wire docking station 620 includes a weight measurement device such as, for example, a scale similar to the scale 145 of FIG. 1. The scale is configured to generate a weight status of the source of consumable welding wire 615. In accordance with various embodiments, the weight status indicates a weight or a change in weight of the source of consumable welding wire 615. The weight status changes as the source of consumable welding wire 615, docked with the loading platform, is consumed during a welding operation. The weight status may be in the form of digital data, in accordance with one embodiment, and may be communicated from the weight measurement device (e.g., a scale) to the first communication module 640 of the wire docking station 620 in a wired or wireless manner. Again, the weight status is part of the docking station data.

In one embodiment, the wire docking station 620 includes an RFID reader similar to the RFID reader 143 of Fig. 1. The RFID reader of the wire docking station 620 is operatively connected to the first communication module 640 in a wired or wireless manner. The RFID reader of the wire docking station 620 is configured to read at least a portion of the docking station data encoded on an RFID tag (e.g., similar to the RFID tag 182 of FIG. 1) on the source of consumable welding wire 615. For example, the docking station data encoded on the RFID tag on the source of consumable welding wire 615 may include at least one of a wire type, a wire size, a lot code, or a wire density of the source of consumable welding wire 615. Other types of docking station data associated with the source of consumable welding wire 615 are possible as well, in accordance with other embodiments.

The RFID reader of the wire docking station 620 is configured to communicate the data read from the RFID tag of the source of consumable welding wire 615 to the first communication module 640. In one embodiment, the first communication module 640 stores the data read from the RFID tag of the source of consumable welding wire 615 in the memory 720. In this manner, the wire docking station 620 "knows" the characteristics of the source of consumable welding wire 615 with which it is loaded, and can communicate those characteristics as docking station data to the welding power source 605 as discussed herein.

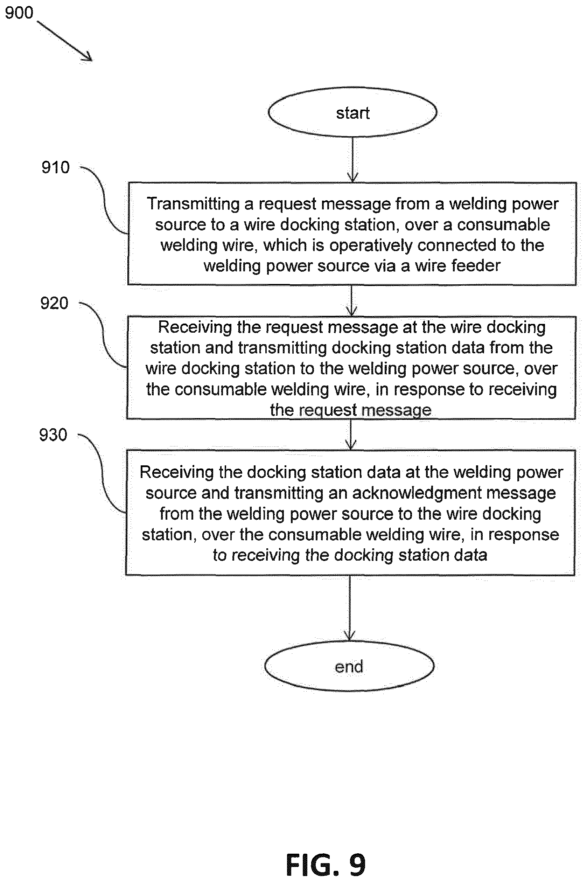

FIG. 9 illustrates a flowchart of an embodiment of a method 900 of monitoring a replaceable source of consumable welding wire using the system 600 of FIG. 6. At block 910 of the method 900, a request message is transmitted from a welding power source to a wire docking station, over a consumable welding wire, which is operatively connected to the welding power source via a wire feeder. For example, referring to FIG. 6, the welding power source 605 may transmit the request message as voltage pulses to be received by the communication module 640 of the wire docking station 620 as discussed herein. In one embodiment, the welding power source 605 does not "know" if it is operatively connected to a wire docking station and whether such a wire docking station is loaded with a source of consumable welding wire. Therefore, the request message is effectively requesting that any docking station that may be operatively connected to the welding power source 605 communicate its docking station data to the welding power source 605.

At block 920 of the method 900, the request message is received at the wire docking station and the wire docking station transmits docking station data to the welding power source, over the consumable welding wire, in response to receiving the request message. For example, referring to Fig. 6, the communication module 640, upon receiving the request message, retrieves the docking station data from memory and transmits the docking station data to the welding power source 605 over the consumable welding wire 615' as discussed herein.

At block 930 of the method 900, the welding power source receives the docking station data and transmits an acknowledgement message to the wire docking station, over the consumable welding wire, in response to correctly receiving the docking station data. For example, referring to FIG. 6, upon receiving the docking station data, the welding power source 605 may perform a check on the docking station data (e.g., a checksum) to ensure that the docking station data was received correctly. Upon verifying proper reception of the docking station data, the welding power source 605 transmits the acknowledgement message. If the docking station data was not received correctly, an acknowledgement message may not be sent and the method 900 may be repeated, for example, until proper reception of the docking station data is received.

In this manner, a welding power source can communicate with a welding wire docking station over a consumable welding wire to monitor the status of a source of consumable welding wire loaded on the wire docking station.

In accordance with one embodiment, the welding power source 605 includes processing and memory elements/components, for example, similar to the processor(s) 514 and the memory (e.g., ROM 532 and RAM 530) of FIG. 5. The welding power source 605 may also include user interface elements/components, for example, similar to the user interface input devices 522 and the user interface output devices 520 of FIG. 5. As a result, the welding power source 605 can be configured to (e.g., be programmed to) calculate one or more parameters based on the docking station data received from the wire docking station 620. For example, in one embodiment, the welding power source 605 can be configured to (e.g., be programmed to) calculate a remaining wire parameter indicating how much of the source of consumable welding wire 615 (e.g., in feet) is left after a welding process. The calculation can be based on a weight and a wire density of the source of consumable welding wire 615 provided as part of the docking station data. For example, if the wire density is in the form of weight per feet, then the welding power source 605 can calculate the remaining wire parameter for the source of consumable welding wire 615, as:

$$\text{remaining wire parameter (in feet)} = \text{weight/wire density.}$$

The remaining wire parameter may be displayed to a user on a user interface output device of the welding power source 605. Other parameters may be calculated based on the docking station data, as well, in accordance with other embodiments. In this manner, the user of the welding power source (or another person within the welding environment responsible for keeping the welding environment up and running) can monitor the status of the source of consumable welding wire 615. In other embodiments, the processing and memory elements/components can be in the wire docking station 620 such that calculations (e.g., calculation of the remaining wire parameter) are made in the wire docking station 620 and communicated to the welding power source 605 as part of the docking station data.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

REFERENCE NUMBERS

| 100 | system | 430 | block |
| 110 | environment | 500 | computer |
| 112 | first server computer | 512 | bus subsystem |
| 114 | second server computer | 514 | processor |
| 120 | environment | 516 | network interface subsystem |
| 130 | welding power source | 520 | output device |
| 140 | docking station | 522 | input device |
| 141 | loading platform | 524 | storage subsystem |
| 143 | reader | 526 | storage subsystem |
| 145 | scale | 528 | memory subsystem |
| 147 | sensor | 530 | random access memory (RAM) |
| 149 | device | 532 | read only memory (ROM) |
| 150 | welding power source | 600 | system |

(continued)

| | | | |
|---|---|---|---|
| 160 | docking station | 605 | power source |
| 170 | computer network | 607 | first welding output stud |
| 180 | welding wire | 609 | second welding output stud |
| 182 | tag | 610 | wire feeder |
| 200 | system | 611 | welding cable |
| 300 | method | 612 | welding cable |
| 310 | block | 615 | welding wire |
| 320 | block | 615' | welding wire |
| 330 | block | 620 | docking station |
| 400 | method | 630 | welding gun |
| 410 | block | 635 | hose |
| 420 | block | 637 | contact tip |
| 640 | module | 710 | transmitter |
| 640' | module | 720 | memory |
| 642 | wire or cable | 730 | receiver |
| 643 | contact mechanism | 810 | transmitter |
| 644 | wire or cable | 820 | memory |
| 644' | wire or cable | 900 | method |
| 646 | device | 910 | block |
| 650 | electrical ground | 920 | block |
| 660 | workpiece | 930 | block |
| 662 | cable | | |
| 664 | cable | | |

**Claims**

1. A system (100, 200, 600) for relating welding wire to a welding power source in a welding environment (110, 120), the system (100, 200, 600) comprising:

   a welding power source (130, 150, 605) having a first welding output stud and a second welding output stud (607, 609);
   a pair of welding power cables (611, 612);
   a wire feeder (610) operatively connected to the first welding output stud (607) and the second welding output stud (609) of the welding power source (130, 150, 605) via the pair of welding power cables (611, 612);
   a wire docking station (140, 160, 620) configured to accept a replaceable source of consumable welding wire (615, 615'), wherein the consumable welding wire (615, 615') of the replaceable source of consumable welding wire is supplied from the wire docking station (140, 160, 620) to the wire feeder (610); and
   a welding gun (630) configured to receive the consumable welding wire (615, 615') from the wire feeder (610), wherein the welding gun (630) includes a contact tip (637) that electrically connects the consumable welding wire (615, 615') to the first welding output stud (607) of the welding power source (130, 150, 605) via the wire feeder (610) forming a contact tip connection, and
   wherein the wire docking station (140, 160, 620) includes a first communication module (640) configured to communicate docking station data to the welding power source (130, 150, 605) over the consumable welding wire (615, 615') as supported by at least the pair of welding power cables (611, 612) and the contact tip connection.

2. The system (100, 200, 600) of claim 1, wherein the docking station data includes at least one of an identity of the wire docking station (140, 160, 620), a location of the wire docking station (140, 160, 620), a warning or notification message, a weight status, a wire type, a wire size, a lot code, or a wire density of the source of consumable welding wire (615, 615').

3. The system (100, 200, 600) of claim 1 or 2, wherein the first communication module (640) of the wire docking station (140, 160, 620) includes a memory storing at least the docking station data.

**4.** The system (100, 200, 600) of any of the claims 1 to 3, wherein the first communication module (640) of the wire docking station (140, 160, 620) includes a transmitter configured to transmit current draw pulses over the consumable welding wire (615, 615') to communicate the docking station data to the welding power source (130, 150, 605), as supported by at least:

the pair of welding power cables (611, 612),
the contact tip connection,
a first electrical connection between the source of consumable welding wire (615, 615') and the first communication module, and
a second electrical connection between the first communication module and the second welding output stud (609), and

wherein the welding power source (130, 150, 605) includes a receiver configured to receive the docking station data as the current draw pulses, and/or wherein the welding power source (130, 150, 605) includes a transmitter configured to transmit voltage pulses over the consumable welding wire (615, 615') to the first communication module of the wire docking station to communicate power source data to the wire docking station (140, 160, 620), as supported by at least:

the pair of welding power cables (611, 612),
the contact tip connection,
a first electrical connection between the source of consumable welding wire (615, 615') and the first communication module, and
a second electrical connection between the first communication module and the second welding output stud (609), and

wherein the first communication module of the wire docking station (140, 160, 620) includes a receiver configured to receive the power source data as the voltage pulses.

**5.** The system (100, 200, 600) of any of the claims 1 to 4, wherein the wire docking station (140, 160, 620) includes a contact mechanism configured to form a first electrical connection between the source of consumable welding wire and the first communication module, and wherein the contact mechanism (643) is operatively configured to make continuous contact with the source of consumable welding wire when loaded in the wire docking station (140, 160, 620), and/or
wherein the wire docking station (140, 160, 620) includes a scale (145) configured to measure a weight status of the source of consumable welding wire, when loaded in the wire docking station (140, 160, 620), and communicate the weight status to the first communication module.

**6.** The system of any of the claims 1 to 5, further comprising a second electrical connection between the first communication module of the wire docking station (140, 160, 620) and the second welding output stud (609) of the welding power source (130, 150, 605), wherein the second electrical connection is accomplished via at least one of a common building electrical ground (650), a grounded fixture, or a dedicated electrical return cable.

**7.** The system (100, 200, 600) of any of the claims 1 to 6, wherein the wire feeder (610) includes a second communication module configured to communicate with the welding power source (130, 150, 605) over the pair of welding power cables (611, 612), wherein the second communication module has substantially a same electrical circuit configuration and uses substantially a same communication protocol as that of the first communication module.

**8.** The system (100, 200, 600) of any of the claims 1 to 7, wherein the source of consumable welding wire includes one of a drum of welding wire, a box of welding wire, or a spool of welding wire.

**9.** A wire docking station (140, 160, 620) for use in a welding environment (110, 120), the wire docking station (140, 160, 620) comprising:

a loading platform (141) configured to accept a replaceable source of consumable welding wire (615, 615');
a scale configured to generate a weight status of the source of consumable welding wire when docked with the loading platform (141);
a communication module; and

a contact mechanism (643) configured to form an electrical connection between the source of consumable welding wire (615, 615') and the communication module, wherein the communication module includes a transmitter configured to transmit docking station data as current draw pulses to a welding power source (130, 150, 605) over the consumable welding wire of the source of consumable welding wire (615, 615'), wherein, preferably, the docking station data includes at least one of an identity of the wire docking station (140, 160, 620), a location of the wire docking station (140, 160, 620), a warning or notification message, the weight status, a wire type, a wire size, a lot code, or a wire density of the source of consumable welding wire (615, 615').

10. The wire docking station (140, 160, 620) of claim 9, wherein the contact mechanism (643) includes at least one of an electrically conductive brush or an electrically conductive plate operatively configured to make continuous contact with the source of consumable welding wire when loaded in the wire docking station.

11. The wire docking station (140, 160, 620) of claim 9 or 10, further comprising an RFID reader operatively connected to the communication module and configured to read at least a portion of the docking station data from an RFID tag (182) on the source of consumable welding wire (615, 615') encoded with the at least a portion of the docking station data.

12. The wire docking station (140, 160, 620) of any of the claims 9 to 11, wherein the communication module includes a receiver configured to receive power source data transmitted as voltage pulses by the welding power source (130, 150, 605) over the consumable welding wire (615, 615') of the source of consumable welding wire (615, 615').

13. A method of monitoring a replaceable source of consumable welding wire, the method comprising:

communicating docking station data from a wire docking station to a welding power source as current draw pulses over a consumable welding wire of a source of consumable welding wire loaded onto the wire docking station; and
communicating power source data from the welding power source to the wire docking station as voltage pulses over the consumable welding wire of the source of consumable welding wire,

wherein, preferably, the docking station data includes at least one of an identity of the wire docking station, a location of the wire docking station, a warning or notification message, a weight status, a wire type, a wire size, a lot code, or a wire density of the source of consumable welding wire.

14. The method of claim 13, wherein the power source data includes at least one of a request message to request the wire docking station to transmit the docking station data over the consumable welding wire or an acknowledgement message to acknowledge that the docking station data has been received by the welding power source.

15. The method of claim 13 or 14, wherein the communicating between the wire docking station and the welding power supply over the consumable welding wire is supported by a wire feeder, operatively connected to the welding power source via a pair of welding power cables, and a contact tip of a welding gun operatively connected to the wire feeder, wherein the wire feeder and the welding gun receives the consumable welding wire from the wire docking station.

100

110
Cloud Environment

112

114

Server
Computer

Server
Computer

120

Welding Environment

130

132

170

LAN/WAN

149

147

143

182

141

145

140

150

160

**FIG. 1**

FIG. 2

300

start

310

receive first data associated with a consumable source
of welding wire at one or more server computers, where
the first data may indicate an identity, a location, and a
weight status of the consumable source of welding wire

320

receive second data associated with a welding power
source at the one or more server computers, where the
second data may indicate an identity, a location, and an
activation status of the welding power source

330

the server computers match the welding power source
to the consumable source of welding wire based on the
first data and the second data, indicating that the
welding power source is actively using the consumable
source of welding wire during a welding operation

end

# FIG. 3

400

**start**

410 receive first data associated with a consumable source of welding wire at one or more server computers, where the first data may indicate an identity, a location, and a an energization status of the consumable source of welding wire

420 receive second data associated with a welding power source at the one or more server computers, where the second data may indicate an identity, a location, and an activation status of the welding power source

430 the server computers match the welding power source to the consumable source of welding wire based on the first data and the second data, indicating that the welding power source is actively using the consumable source of welding wire during a welding operation

**end**

# FIG. 4

500

Storage Subsystem
524

Memory Subsystem
528

| ROM 532 | RAM 530 |

File Storage
Subsystem
526

User Interface
Input Devices
522

512

Processor(s)
514

Network
Interface
516

User Interface
Output Devices
520

**FIG. 5**

**FIG. 6**

640

Comm. Module

Transmitter
710

Receiver
730

Memory
720

# FIG. 7

605

Welding Power Source

Transmitter
810

Receiver
830

Memory
820

FIG. 8

900

start

910

Transmitting a request message from a welding power source to a wire docking station, over a consumable welding wire, which is operatively connected to the welding power source via a wire feeder

920

Receiving the request message at the wire docking station and transmitting docking station data from the wire docking station to the welding power source, over the consumable welding wire, in response to receiving the request message

930

Receiving the docking station data at the welding power source and transmitting an acknowledgment message from the welding power source to the wire docking station, over the consumable welding wire, in response to receiving the docking station data

end

# FIG. 9

Europäisches
Patentamt

European
Patent Office

Office européen
des brevets

# EUROPEAN SEARCH REPORT

Application Number

EP 18 19 2689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/031052 A2 (ILLINOIS TOOL WORKS [US]; ALBRECHT BRUCE [US]) 13 March 2008 (2008-03-13) * figures 1-3 * * paragraphs [0004], [0007], [0008], [0021], [0024] - [0026] * ----- | 1-15 | INV. B23K9/095 B23K9/10 |
| A | WO 2016/033568 A1 (CRC EVANS PIPELINE INTERNAT INC [US]) 3 March 2016 (2016-03-03) * figures 19-23 * * paragraphs [0075], [0076], [0087], [0088], [0092] * ----- | 1-15 | |
| A | US 2013/112677 A1 (CHRISTOPHER MARK R [US] ET AL) 9 May 2013 (2013-05-09) * the whole document * ----- | 1-15 | |

TECHNICAL FIELDS
SEARCHED        (IPC)

B23K

The present search report has been drawn up for all claims

| Place of search | Date of completion of the search | Examiner |
|---|---|---|
| Munich | 12 March 2019 | Weyand, Tim |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 18 19 2689

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2019

| Patent document cited in search report | | Publication date | Patent family member(s) | | Publication date |
|---|---|---|---|---|---|
| WO 2008031052 | A2 | 13-03-2008 | US 2008061049 | A1 | 13-03-2008 |
| | | | US 2014166633 | A1 | 19-06-2014 |
| | | | WO 2008031052 | A2 | 13-03-2008 |
| WO 2016033568 | A1 | 03-03-2016 | AU 2015308646 | A1 | 09-02-2017 |
| | | | BR 112017003933 | A2 | 06-03-2018 |
| | | | CA 2956318 | A1 | 03-03-2016 |
| | | | CN 106879254 | A | 20-06-2017 |
| | | | EP 3186025 | A1 | 05-07-2017 |
| | | | RU 2017110223 | A | 01-10-2018 |
| | | | US 2017274467 | A1 | 28-09-2017 |
| | | | WO 2016033568 | A1 | 03-03-2016 |
| US 2013112677 | A1 | 09-05-2013 | BR 112014011038 | A2 | 02-05-2017 |
| | | | CA 2854472 | A1 | 16-05-2013 |
| | | | CN 104010756 | A | 27-08-2014 |
| | | | EP 2776198 | A1 | 17-09-2014 |
| | | | US 2013112677 | A1 | 09-05-2013 |
| | | | WO 2013070546 | A1 | 16-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 69642317 A
- US 20170120363 A1

- US 15294649 B